(19) **Europäisches Patentamt / European Patent Office / Office européen des brevets**

(11) **EP 2 731 020 B1**

(12) **EUROPEAN PATENT SPECIFICATION**

(45) Date of publication and mention
of the grant of the patent:
**05.04.2017 Bulletin 2017/14**

(51) Int Cl.:
***G06F 17/30*** *(2006.01)*

(21) Application number: **12191690.2**

(22) Date of filing: **07.11.2012**

(54) **Database system and method for storing distributed data and logic**

Datenbanksystem und Verfahren zur Speicherung verteilter Daten und Logik

Système de base de données et procédé de stockage de données distribuées et logique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.05.2014 Bulletin 2014/20**

(73) Proprietor: **FUJITSU LIMITED
Kawasaki-shi,
Kanagawa 211-8588 (JP)**

(72) Inventors:
• **Carvalho, Nuno
Hayes, Middlesex UB4 8FE (GB)**
• **Hu, Bo
Huntingdon, Cambridgeshire PE29 6JL (GB)**
• **Menday, Roger
Hayes, Middlesex UB4 8FE (GB)**

(74) Representative: **Hutchison, James
Haseltine Lake LLP
300 High Holborn
London, Greater London WC1V 7JH (GB)**

(56) References cited:
**US-A1- 2007 233 722**

• **Prima Chairunnanda ET AL: "Graph Data
Partition Models for Online Social Networks", HT
'12 Proceedings of the 23rd ACM conference on
Hypertext and social media, 25 June 2012
(2012-06-25), pages 175-179, XP055053148,
Retrieved from the Internet:
URL:http://dl.acm.org/citation.cfm?id=2310 026
[retrieved on 2013-02-12]**
• **MIN CAI ET AL: "RDFPeers", PROCEEDINGS OF
THE 13TH CONFERENCE ON WORLD WIDE
WEB , WWW '04, 1 January 2004 (2004-01-01),
page 650, XP055038454, New York, New York,
USA DOI: 10.1145/988672.988760 ISBN:
978-1-58-113844-3**
• **DOMINGUEZ-SAL D ET AL: "Survey of Graph
Database Performance on the HPC Scalable
Graph Analysis Benchmark", 15 July 2010
(2010-07-15), WEB-AGE INFORMATION
MANAGEMENT : WAIM 2010 INTERNATIONAL
WORKSHOPS: IWGD 2010, XMLDM 2010, WCMT
2010, JIUZHAIGOU VALLEY, CHINA, JULY 15-17,
2010; [LECTURE NOTES IN COMPUTER
SCIENCE ; 6185], SPRINGER, BERLIN [U.A.],
PAGE(S) 37 - 48, XP019156532, ISBN:
978-3-642-16719-5 * the whole document ***

EP 2 731 020 B1

Printed by Jouve, 75001 PARIS (FR)

**Description**

The present invention is in the field of database systems. In particular, invention embodiments are applicable to the storage of graph data in distributed storage systems, and also to the storage of processing logic for operating on that graph data.

Graph data models are ideal for semantic data representation and are widely adopted in ontology-based applications (in particular the semantic web and Linked Data applications). As the size of ontology knowledge bases grows, it becomes imperative to distribute graph-based ontology models to multiple storage units for better scalability and performance.

Certain implementations of graph data models may require that processing operations/procedures be performed on data within the graph, for example, in response to system events or changes to other data in the graph. Such processing operations may be performed on servers that store the distributed data, since servers are taken to have processing capability. In order to perform a processing operation, a server will require processing logic and possibly other information, the required logic and possible additional information may be referred to as a processing unit. Executing processing units may be a cause of network traffic if the execution includes read/update requests to data stored on servers other than the server performing the execution.

Data is interpreted within its context. With conventional data management systems, this can render a purely data-centric approach less favourable and stress a need for a logic tier on top of data tier to present the interpretation context, memorising the state of the domain. In a highly distributed environment, this logic tier, in particular a "stateful" logic tier - in some cases even escalated to a "state" tier - can become the bottleneck of horizontally distributing data.

Previous state-of-the-art systems try to minimise network communication based on different approaches.

Some systems place the data closer to the fixed PUs (Processing Unit -including logic which is executed in a processing operation) that need to read/update that data. This creates potential conflicts between data-centred distribution mechanisms and procedure-based ones, which in many cases are optimised differently. This approach is not feasible when the same data is needed by different processing procedures that are executed in different servers. Caching systems are often employed to overcome this limitation. However, there is network traffic and processing cost associated with handling cache consistency issues, such as maintaining a record of where caches are (to update/disable cache entries) and having to send updates through the network.

In an alternative approach, NoSQL systems are used to execute map/reduce tasks in parallel and exchange only the results of each processing step (leading to a smaller amount of data being exchanged through the network). Map/reduce outperforms conventional approaches when the tasks are carefully crafted and offer clear logic segmentation. However, it becomes less desirable when complex logic exists.

Stream processing systems distribute processing elements through a network of servers and define explicit in/out ports to connect processing elements and create information pipelines. This approach does not integrate the processing elements with the stored data (in the graph storage), making it very difficult to place processing elements closer to the data they need. Instead, data are normally fetched and filtered to be leveraged by different processes. Moreover, this kind of system is more suitable for streamed data and not for stored data.

Prima Chairunnanda et al., "Graph Data Partition Models for online Social Networks", HT '12 Proceedings of the 23rd ACM conference on Hypertext and social media, 25 June 2012, pages 175-179, XP055053148, discloses a consideration of different methods of partitioning databases. Vertex partitioning is disclosed, in which the graph is partitioned into subgraphs, where each vertex belongs to exactly one subgraph. It is further disclosed that after a particular vertex is visited, each of its neighbour vertices will have an increased chance of being visited next.

Embodiments of the present invention include a distributed network of servers configured to store a data graph comprising graph entities including semantic entities linked by directed labelled links denoting semantic relationships between pairs of semantic entities, and also including functional entities each representing a processing operation and being linked by directed labelled links to one or more semantic entities denoting that the processing operation is configured to access the one or more linked semantic entities during execution of the processing operation; and a database controller comprising: a partitioning unit configured to partition the data graph into sub graphs; and a distributing unit configured to distribute each sub graph to a different server from among the distributed network of servers; wherein the partitioning unit is configured to partition the data graph in dependence upon the directed labelled links to preferentially partition pairs of graph entities linked by directed labelled links into the same sub graph; and wherein the distributed network of servers are configured to store the logic required to realise each processing operation on the same server as the functional entity representing the processing operation. In other words, the partitioning unit is configured to partition the data graph into sub graphs based on the semantic closeness of graph entities (represented by data affinity values).

One of the challenging issues in highly distributed, data intensive systems is how data should be partitioned and located to a network of storage units so that execution of the business and service logics will not incur extensive network traffic among the data storage units. Embodiments of the present invention provide a system that makes correlations between data and procedures using graph data representation as the instrument, in order to minimise network communication.

Embodiments of the present invention provide a distributed database system that stores both semantic data and units of processing logic on specific servers among a distributed network of servers. Embodiments leverage directed labelled links reflecting the affinity among semantic entities and between semantic entities and processing operations to locate units of processing logic required to realise a processing operation close to the semantic data that they utilise. Consequently, network traffic between servers is minimised.

Embodiments of the present invention not only partition semantic data into sub-graphs for distribution among the servers, but also partition service logic into distinct processing operations and the logic required to realise those operations. The distinct processing operations and their logic are stored in correlation with the semantic data to which they require access during execution, the correlation being established by connecting a representation of the processing operation with the semantic data using conceptual relationships in the graph representation. In other words, each processing operation has a data representation which is part of the graph. We note that the logic required to realise a processing operation may be referred to as a processing unit. The functionality of a processing operation (or processing unit) is explicitly defined by the logic required to realise the processing operation, which logic is stored on the same server as the graph entity representing the processing operation. The pegging of the logic to the server of the functional entity enables the functional entity to be used as a means of representing the processing operation on the data graph and to effectively act as a flag indicating where to store the logic.

Advantageously, including a representation of a processing unit in the data graph enables the partitioning unit to handle the task of distributing the processing units among the distributed network of servers in a manner consistent with that in which it handles the task of distributing semantic data among the distributed network of servers. Embodiments of the present invention decide on which server a graph entity should be placed based on the connections (directed labelled links) between the graph entity and other graph entities. We note that terminology such as vertex, node, or resource may also be employed in place of 'entity', and that 'graph entity' is taken to refer collectively to semantic entities and functional entities.

In summary, the advantages of embodiments of the present invention include some or all of the following:

- a reduction in the network communication required to implement service logic in a distributed database system;
- an increase in the level of scalability of the processing in a functional distributed database system;
- an integrated mechanism for distributing processing logic and semantic data to avoid clashes which may be caused by running disparate mechanisms;
- a simple mechanism for assessing the affinity between graph entities using only information about local graph links instead of global knowledge about the entire graph, thus reducing processing costs associated with the partitioning and distribution of data.

Invention embodiments may implement an event-based system, wherein each processing operation is associated with a type of event, and when the server storing the functional entity representing the processing operation receives a notification of an event of the associated type with a scope which includes a semantic entity linked to said functional entity via a directed labelled link, said server is configured to execute the processing operation.

Advantageously, events provide a mechanism for processing units to be triggered and for processing units to communicate with one another. In invention embodiments, an event may be generated in the system itself, for example by execution of a processing operation, or by applications external to the system which access the system in such a way that an event is generated in the system. For example, by making a read access to the data graph, or by requesting some sort of summation of several semantic entities in the data graph.

In such event-based implementations, the database controller may further comprise an event controller; wherein an event is generated by an application accessing the database system or by a processing operation being executed within the database system, and the database controller is configured to receive a generated event specifying an event type and a target semantic entity, to obtain an indication of the server or servers storing the functional entity representing the processing operation associated with the specified event type and having a directed labelled link to the target semantic entity, and to notify the indicated server of the specified type and target semantic entity of the event.

A centralised event controller mechanism (which may, in fact, be realised by cooperating distributed servers) enables events to be queued and distributed among servers in a controlled fashion. Events formalise the process of organising the execution of processing operations in embodiments of the present invention. An event controller, which may also be referred to as an event manager, provides a consistent event management point and queuing mechanism.

Events can either be raised by the system (i.e. generic structural events), or by external application logic (i.e. an event can be sent into the system), or by internal logic (i.e. in the process of handling an event, the handler logic might raise some new events.

In order to facilitate the division of the graph data among the distributed network, the partitioning unit may be configured to attribute an affinity value to each directed labelled link between entities, and to use the affinity values to partition the data graph.

Attributing an affinity value provides a quantitative assessment to the affinity of a pair of graph entities connected by a link. The affinity values thus enable the partitioning unit to apply clustering algorithms to the graph entities to find combinations of sub graphs that will reduce the network traffic.

The partitioning unit may be configured to use any of a number of policies, based on the affinity values, to partition the data graph into sub graphs. The policies may be realised by algorithms. For example, it may be that an algorithm is used which partitions the data in a way which maximises the sum of all affinity values between pairs of graph entities stored on the same server (same-server pairs). So that when a linked pair of graph entities are stored on different servers, the data affinity value attributed to that link does not contribute to the total.

As an alternative policy for partitioning the data graph, the partitioning unit may be configured to partition the data graph such that the total of the affinity values of directed labelled links between graph entities in different sub graphs is minimised.

Network traffic is caused by processing units being executed on one server which execute semantic data on a different server, and/or by graph traversals which frequently cross between servers. Leveraging data affinity values of linked pairs on different servers serves as a means to indicate the likelihood of a cross-server data access or graph traversal occurring, and therefore, minimising the sum of data affinity values between such linked pairs is a good indication that network traffic will be minimised.

As an alternative partitioning policy, it may be that the partitioning unit is configured to set a threshold value and to ensure that any graph entities linked by a directed labelled link having an affinity value above the threshold value are partitioned into the same sub graph.

Advantageously, such a mechanism is simple to implement, although some complex logic may be implemented in setting the threshold value.

In addition to affinity values being used to partition the graph, the affinity values may be leveraged by other operations. Optionally, the directed labelled links are stored in association with their respective affinity values.

Such embodiments enable future operations which utilise graph affinity to take place with a reduced processing cost, by taking advantage of the fact that affinity values are already calculated. Furthermore, storing affinity values enables dynamic database control operations which update the affinity values and utilise the updated values to dictate when and/or how the database or its distribution should be updated.

Furthermore, the affinity values may be adapted to reflect dynamism in the data environment. Optionally, after a processing operation is executed, the partitioning unit is configured to increase the affinity values of directed labelled links between the functional entity representing the executed processing operation and the one or more semantic entities accessed during the execution.

Advantageously, in such embodiments the partitioning unit functions as a dynamic locator. The dynamism provided by the updates provides a mechanism by which the optimum distribution of processing units among the servers can be continually reassessed, and possibly modifications made if it appears that a processing unit might be better located on a different server, in order to reduce the accesses required by the processing unit to semantic data not stored on the same server.

Dynamism in the data environment may have repercussions for the optimum distribution of processing logic. Optionally, if, after increasing the affinity values, a relocation criterion is satisfied, the partitioning unit is configured to relocate the functional entity to another server from among the distributed network of servers, and to move the logic required to realise the processing operation represented by the relocated functional entity to the another server.

Advantageously, such a mechanism enables the location of the functional entities, and hence the associate processing logic, to reflect the way the processing logic is most commonly used. For example, it may be that a processing operation is configured to access a number of semantic entities, the majority of which are stored on one server and a minority are stored on another server. However, the processing operation is most commonly executed as a consequence of trigger events from the minority on the other server, and hence access the minority more than the majority. In such a case, the affinity values between the functional entity representing the processing operation and the minority would gradually increase, and eventually it may be deemed favourable to relocate the functional entity and hence the processing operation to the server storing the minority.

As exemplary implementation options, it may be that the relocation criterion is satisfied if there is another server on which graph entities linked to the functional entity are stored; and the sum of the affinity values of the links between the functional entity and the graph entities stored on the another server exceeds the sum of the affinity values of the links between the functional entity and the graph entities currently stored on the same server as the functional entity; and if the relocation criterion is satisfied then the functional entity is moved to the another server.

Advantageously, the above criterion exemplifies a simple logic process for deciding when to relocate a functional entity, and hence the logic required to realise the processing operation it represents.

Leveraging data affinity values in graph operations has many beneficial technical effects, as set out in this document. Some of the beneficial effects are emphasised by introducing some additional logic into the calculation of affinity values. For example, it may be that in calculating affinity values, hierarchy links, that is directed labelled links denoting that the semantic relationship between a pair of entities is that one of the pair is a subset of the other, are given a higher data affinity value than: property links, that is directed labelled links denoting that the semantic relationship between a pair of entities is that one of the pair is a property of the other; and access links, that is directed labelled links between a functional entity and a semantic entity which the processing operation represented by the functional entity is configured to access during execution.

Providing a mechanism which distinguishes between different types of directed labelled links adds complexity to the process of attributing affinity values to the links, but also helps to ensure that semantic data that are likely to be accessed together, by processing operations or graph traversals (read accesses) are stored on the same server. Hierarchy links denoting that one semantic entity is a subset of another are taken to include sub-concept links and instance links.

A data graph is a representation of data, and the data may be encoded in storage. Graph data may be encoded and stored as multidimensional arrays, or as symbols linked to other symbols. Another form of encoding is the use of "tuples", which are finite sequences or ordered lists of data, each of a specified type. Optionally, in invention embodiments, the data graph is encoded in the form of triples (which is a tuple of length 3), each triple comprising a label of a subject entity, a label of an object entity, and a predicate indicating a type of relationship between the subject entity and the object entity, wherein the subject entity and the object entity are each either semantic entities or functional entities.

A triple is a finite sequence or ordered list of three items, each of a specified type. The subject and object of the triple represent the concept or entity (collectively referred to as 'graph resources') that are linked on the data graph, and the predicate represents the (directed) arc linking the two. Denoting graph resources or links between them includes representing the graph resources or links, for example by a label, reference, or data embodying the resources or links.

Optionally, the triples may be Resource Description Framework (RDF) triples. Throughout this document, it should be understood that where specific references to "RDF triple(s)" are made, it is an exemplary form of triple, conforming to the RDF standard. Furthermore, references to "triple(s)" include the possibility that the triple in question is an RDF triple.

The triples provide for encoding of graph data by characterising the graph data as a plurality of subject-predicate-object expressions. In that context, the subject and object are graph nodes of the graph data, and as such are entities, objects, instances, or concepts (collectively 'graph resources'), and the predicate is a representation of a relationship between the subject and the object. The predicate asserts something about the subject by providing a specified type of link to the object. For example, the subject may denote a Web resource (for example, via a URI), the predicate denote a particular trait, characteristic, or aspect of the resource, and the object denote a range of that trait, characteristic, or aspect. In other words, a collection of triple statements intrinsically represents directional graph data. The RDF standard provides formalised structure for such triples.

Of course, embodiments of the present invention may store graph data encoded as quads, in which the fourth item is a value representing the affinity value of the link between graph entities encoded in the triple. Alternatively, embodiments of the present invention may encode graph data as triples which serve as keys of a vey-value store, with the value being a storage area indexed by the triple and storing data associated with the triple, which may include, for example, the corresponding affinity value.

Embodiments of another aspect of the present invention include a method of storing a data graph, the method comprising: storing the data graph across a distributed network of servers, the data graph comprising linked graph entities including semantic entities linked by directed labelled links denoting semantic relationships between pairs of linked semantic entities, and also including functional entities each representing a processing operation and being linked by directed labelled links to one or more semantic entities denoting that the processing operation is configured to access the linked semantic entities during execution of the processing operation; and at a database controller: partitioning the data graph into sub graphs; and allocating each sub graph to a different server from among the distributed network of servers; wherein the partitioning includes partitioning the data graph in dependence upon the directed labelled links to preferentially partition linked entities into the same sub graph; and the method further comprises: storing the logic required to realise each processing operation on the same server as the functional entity representing the processing operation.

Embodiments of another aspect of the present invention include a suite of computer programs which, when executed by a distributed network of servers, cause the distributed network of servers to become a database system embodying the present invention, or to perform a method embodying the present invention.

Although the aspects (software/methods/apparatuses) are discussed separately, it should be understood that features and consequences thereof discussed in relation to one aspect are equally applicable to the other aspects. Therefore, where a method feature is discussed, it is taken for granted that the apparatus embodiments include a unit or apparatus configured to perform that feature or provide appropriate functionality, and that programs are configured to cause a computing apparatus on which they are being executed to perform said method feature.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

Preferred features of the present invention will now be described, purely by way of example, with reference to the accompanying drawings, in which:-

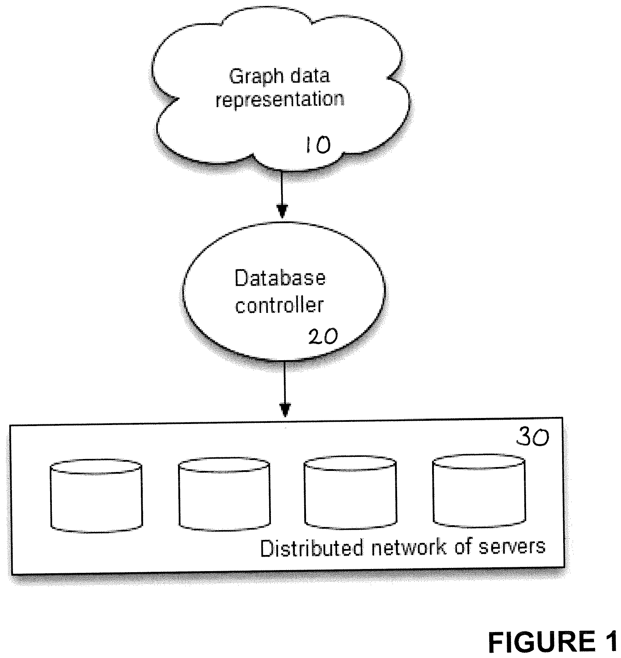

Figure 1 illustrates a system architecture of an invention embodiment;
Figure 2 illustrates a data graph which may be stored by a database system embodying the present invention;
Figure 3 sets out a more detailed exemplary system architecture embodying the present invention; and
Figure 4 illustrates a flow of control for dynamically updating the location of processing logic in response to events being handled by a database system embodying the present invention.

The system architecture of claim 1 includes a database controller 20 and a distributed network of servers 30. The graph data representation 10 is a representation of the stored data, such as may be presented to applications or other external parties. The graph data representation 10 may also be used internally by the database controller 20 to divide data and processing units among the distributed network of servers 30. A database of graph data, which may be referred to simply as a data graph, may include a semantic network formed as a representation of knowledge or information of a particular domain, with graph nodes representing an entity, and arcs representing semantic relationships between the entities.

The graph data representation 10 may be stored in any of a number of ways. The data which is representable in the form of a graph of interconnected nodes is encoded in some way in order to be partitioned and stored amongst the distributed network of servers 30. Furthermore, certain encoding techniques enable the graph database to be queried and updated in an intuitive and efficient manner. In embodiments of the present invention, graph data may be encoded as a collection of triples, which is a finite sequence or ordered list of three objects, each of a specified type. The subject and object of the triple represent the concept or entity (collectively referred to as 'graph resources') that are linked on the graph, and the predicate represents the arc linking the two. The predicate is labelled to describe or denote the nature of the relationship between the two. For example, if one is a particular property of the other, then the predicate is labelled to indicate that particular property. Denoting graph resources or links between them includes representing the graph resources or links, for example by a label, reference, or data embodying the resources or links.

The graph data representation 10 is illustrated as being an entity separated from the distributed network of storage servers 30 by the database controller 20. Of course, this arrangement is for illustrative purposes to demonstrate the data graph as a whole being made available to external applications via the database controller. In reality, the representation of data as a graph exists wherever encoded graph data exists, and the encoded data may be referred to, manipulated, and queried by reference to the graph entities it represents, although such references, manipulations, and queries may need to be made/channeled via a controller or control component in order to reflect the data encoding. Such a controller or control component may be, for example, an API or wrapper of some kind.

In embodiments of the present invention, the data graph comprises linked graph entities (this is, of course, typical of data graphs) including semantic entities linked by directed labelled links denoting semantic relationships between pairs of linked semantic entities. The graph entities also include functional entities each representing a processing operation and being linked by a directed labelled link to each of the one or more semantic entities, a directed labelled link between a functional entity and a semantic entity denoting that the processing operation represented by the functional entity is configured to access the semantic entity during execution. Semantic entities are graph nodes whose meaning is interpreted by their name and whose properties can be inferred from the other semantic entities to which they are linked and the labels and directions of those links. The semantic entities thus form a semantic network of interlinked nodes representing knowledge or information about a particular domain. A semantic entity may also be referred to as a data entity, a graph node, a semantic resource, a semantic concept or a semantic instance. The data graph in embodiments of the present invention is composed in such a way that the configuration of a processing operation to access a particular semantic entity is presented as a semantic restriction on the particular semantic entity (i.e as a property thereof).

The database controller 20 provides a set of functions which may be provided by a single centralised unit or apparatus, such as a computer, or which may be provided by a plurality of computers (i.e. servers) working cooperatively with one another to provide a set of functions which operate in a centralised manner. The database controller includes, among other units each configured to provide certain functionality, a partitioning unit configured to partition the data graph into sub graphs, and a distributing unit configured to distribute each sub graph to a different server from among the distributed network of servers. The partitioning unit is configured to partition the data graph in dependence upon the directed labelled links to preferentially partition pairs of graph entities linked by directed labelled links into the same sub graph. The partitioning unit may be configured to run a partitioning algorithm which uses the directed labelled links between graph entities to decide which graph entities should be grouped together and which should be in different partitions. Furthermore, the partitioning unit may be configured to run an algorithm which attributes a numerical score, an affinity value, to each labelled directed link, to reflect the relevance of the linked graph entities to one another in terms of the likelihood of the link to be traversed by a graph operation, whether that graph operation be a graph traversal operation resulting from a query, or a processing operation accessing graph entities linked to the functional entity representing the processing operation. The affinity value attributed to a link may be dependent upon the type of link, and may be updatable. For example, links which denote subsumption, that is to say, that one graph entity is a sub class of another (and hence inherits the properties of the another entity) or that one graph entity is an instance of another, may be given a higher affinity value than a link denoting that one graph entity is a property of another. A link from a semantic entity to a functional entity, indicating that the functional entity may access the semantic entity during execution, may be treated equally to a property link. Furthermore, the partitioning algorithm may be configured to use the numerical scores to decide which graph entities should be grouped together and which should be partitioned. The partitioning algorithm in that sense is configured to implement a partitioning policy. The nature and design of the partitioning policy will depend on the implementation details. Examples include reducing or minimising the affinity values of links which cross partitions; maximising the affinity values of links between graph entities in the same group, or ensuring that any linked pair which are linked by an affinity value exceeding a threshold are placed in the same group (sub-graph).

In other words, the partitioning unit treats both functional and semantic entities in the same way when partitioning the data graph (and distributing the data). This is enabled by making the use of data items (semantic entities) by a processing unit explicit in the data graph via the associated functional entity.

The distributing unit is configured to apply a data distribution or hashing algorithm to allocate each group of graph entities (sub-graph) to a server. The details of the algorithm are implementation-specific, but it may be that each server is given an ID, and the hashing algorithm allocates each sub-graph a different ID corresponding to a server from among the distributed network of servers 30.

The database controller 20 may be functionality provided by the distributed network of servers 30, or may be a separate device in data communication with the distributed network of servers 30. A server is taken to be a computing apparatus having a storage unit, processing capability, and networking capability for communication of data with other servers in the distributed network and/or a database controller. The network is said to be distributed in the sense that the servers are separate devices which communicate over a network. The network may be wired or wireless or a combination of the two. The network paradigm may be p2p (peer-to-peer), although other network designs could also be implemented in invention embodiments. The servers 30, or one or a subset of the servers 30, may be configured to cooperate in order to provide the functionality of a database controller 20.

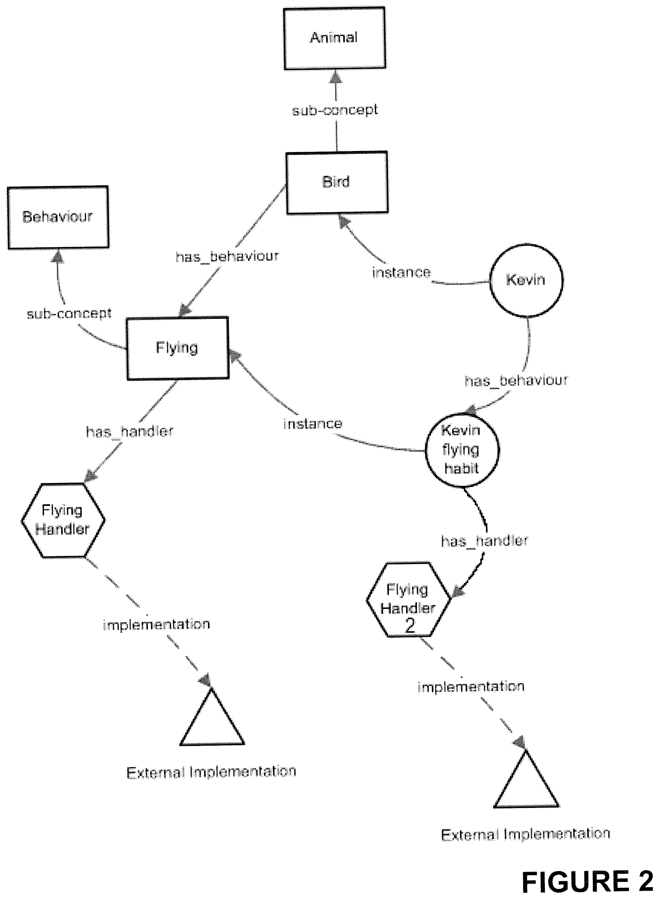

In invention embodiments, an ontological approach may be employed to reveal the connections between data and PUs (processing units). A link from a semantic entity to a functional entity (representing a processing operation or PU) is considered as semantic restriction. Figure 2 illustrates a data graph which may be stored by a database system embodying the present invention.

In Figure 2 the rectangular boxes are concepts, the circular boxes are instances of the concepts (or instances of class) in the semantic model, wherein both instances and concepts are semantic entities, with the exception of 'Flying' and 'Kevin flying habit', which are functional entities representing processing operations. The hexagonal boxes are stored processing logic, and the triangular boxes represent the actual implementations of processing operations represented by the functional entities. A concept is part of an ontological framework of a domain, which sets out a structure against which actual entities existing within the domain can be categorised and should follow, the actual entities being represented by instances. Animal, Bird, and Kevin are semantic entities. Kevin flying habit and Flying are functional entities. Behaviour may be considered to be a functional entity, however it may be that there is no processing operation corresponding generically to Behaviour, but that it exists to provide a root concept to unify all other types of behaviour in the graph. The hexagonal boxes represent the stored processing logic, or the explicit specification of a processing operation, and may be stored as part of the data graph, or may be considered separately. The "has_handler" links in Figure 2 denote that the location of the functional entities Flying and Kevin flying habit, in terms of which server they are stored on, dictate the location of Flying Handler and Flying Handler 2, respectively.

The semantic entity Bird is linked to Animal by a directed labelled link representing the fact that Bird is a sub-concept of Animal. The sub-concept link between Bird and Animal is an example of a subsumption link/relationship, also referred to as a hierarchy link elsewhere in this document. The sub-concept link indicates that the properties of Animal are inherited by Bird, but that Bird may have some additional properties which limit its definition. For example, the Bird concept is linked to the Flying concept by a link labelled "has_behaviour". This is an example of an access link, and the access link is considered to be a property which limits the scope of the Bird concept. That is to say, Birds have the behaviour of Flying. In the domain represented by the graph, Flying is a behaviour and hence is represented by a functional entity, since some processing may occur representing the entity Flying, which processing makes access to the semantic entity Bird. Kevin is linked to Bird by an "instance" link, indicating that Kevin is an example or instance of Bird. Kevin is not a semantic concept since nothing else could be categorised as "a Kevin". Similarly to the relationship between Flying and Bird, Kevin, as an instance of bird, has flying behaviour. Kevin is linked to "Kevin flying habit" by a "has_behaviour" link, which indicates that "Kevin flying habit" is a functional entity treated as a property of Kevin.

Functional entities, Flying and Kevin flying habit, are representations of processing units or processing operations, and the specification of the functions which they represent, specifically the logic required to realise their functions, are represented in Figure 2 by hexagonal boxes Flying Handler and Flying Handler 2. There is a generic event handler for flying events, represented by Flying Handler. Flying Handler is a functional entity representing a processing operation which accesses the Bird semantic concept. The access is denoted by the has_behaviour link between the Flying functional entity and the Bird concept.

There are three types of relationships presented in the diagram: "sub-concept" relationship indicates one concept is a subclass of another one; "instance" indicates a resource is the instance of the concept, both of these are exemplary of hierarchy or subsumption links. A property reference (e.g. "has_behaviour") refines the semantic of a concept or instance with property restrictions, which in the case of "has_behaviour" is an access link indicating that the functional entity (the behaviour) may access the linked concept or instance during execution. The third type of relationship indicated in Figure 2 is an externalisation reference (e.g. "implementation"), which links a behaviour specification, also referred to as an event handler or processing logic, to its concrete implementation. The implementation of behaviour handlers can be realised in many different ways: using native programming languages, with/without human intervention, with/without human interface, etc. In Figure 2 flying data behaviour is given at the concept level to all birds, but the particular instance of Bird, Kevin, has particular processing needs when it flies or as a consequence of its flying behaviour, and hence Kevin has a distinct functional entity from the concept Bird, which has different processing logic. That is to say, in the example of Figure 2, "Kevin" has a unique flying PU that differentiates it from other birds. Such differences can be reflected and leveraged in the conceptual representation. Flying is a very application oriented event. It may be issued by the application utilising the data graph. System events, sucg as generic Create/Read/Update/Delete events may be issued by the data storage/database/database controller.

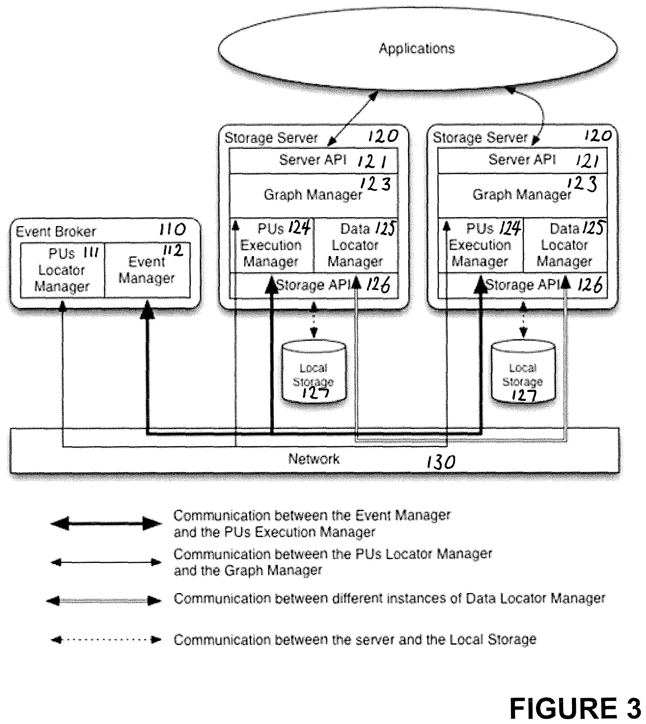

A more detailed exemplary system architecture is depicted in Figure 3. Figure 3 illustrates exemplary storage servers and details their communication with one another. The system is composed by two types of services: The "Storage Servers" and the "Event Broker".

The role of the Storage Server 120 is to manage and store the data, distributing it through a set of equivalent servers. The Storage Server 120 is database control function realised by a network of distributed servers operating on a cooperative basis. For example, each server may be configured to provide database controller functionality, depending on where a request or action occurs. In the context of Figure 3, a Storage Server 120 is taken to be the functionality that coordinates the storage of the data graph among a distributed network of servers, and the actual storing of data occurs at the local storage 127. A storage server 120 contains the following components, which may be realised as software components:

- Server API 121 - This API (Application Programming Interface) is used by client applications that need to access the database system. By using this API, client applications, which may be hosted on the same servers hosting the storage server 120, or may be hosted elsewhere, access the stored data graph, and can cause events to be generated in the database system, triggering PUs. From the point of view of the applications, all the system resources may be seen as data, either being data resources (semantic entities) or PU resources (functional entities). That is to say, the visible or accessible part of a processing unit or processing operation to a client application may be the functional entity representing that processing unit or processing operation in the data graph. The actual stored processing logic may be invisible to the client applications. As an alternative, database systems offer the flexibility of making some PUs directly accessible by client applications. This is done by conveying events to the data item, with the resulting effect of triggering the associated PU. One mechanism of making this conveyance might be using a REST API.

- Graph Manager 123 - This layer allows accessing the underlying stored encoded data using a Graph API. It is used to abstract the underlying encoded stored data, giving a unified graph view across the whole of the stored data, not just that on a particular server. It also hides the distribution among different servers from applications, so that from the client application point of view there are no partitions. If the application needs to access data contained on a different server other than the server to which the application made its access/query, that data is fetched from the respective server before it is returned to the application, so that the application only communicates with a single server per query.

- PUs Execution Manager 124 - This component is configured to execute the PUs, that is to say, to input the processing logic of a processing operation to a processor (possibly in a compiled form) for execution, and to output the results. Each PU execution is triggered by an event, processed by the Event Broker 110. PUs can be available on one or more servers, but are executable only on the particular servers on which the functional entity representing the PU in the data graph is stored. A decision about which server executes a particular PU to handle each event is made by the event broker 110 by accessing a PUs locator manager 111, which is operable to lookup the location of functional entities representing PUs.

- Data Locator Manager 125 - This component is exemplary of the partitioning unit and the distribution unit mentioned elsewhere in this document, and hence is not discussed in detail here. The data locator manager 125 is configured to decide and manage the distribution of the data encoding the data graph among the distributed network of servers. Data are spread among a set of servers and may also be subsequently relocated, if necessary, for optimization purposes.
- Storage API 126 - This API is an interface for a local storage device 127. The local storage device 127 is provided in the same server apparatus as the software components of the storage server 120, or is at least accessible via said software components. The local storage device 127 can be any persistent storage device, such as a local disk, a Network Attached Storage, or even a more complex solution, such as a key/value store. The storage server 120 can access the local storage 127 via the storage API 126.

The Event Broker service 110 can be implemented as a service provided by a single server or a distributed and coordinated set of servers (to achieve fault tolerance and processing scalability), and can even be deployed as an extra component in the same servers as the storage servers 120. The event broker service 110 is exemplary of the event controller mentioned elsewhere in this document, and in this example contains the following components:

- PUs Locator Manager 111 -The PUs locator manager 111 is responsible for obtaining the location of a PU or, in case that a database system has a PU available on more than one server, this component is responsible for deciding where a PU is to be executed, based on the scope of the event being processed by the event broker 110. Effectively, the event broker 110 receives events, or generates events based on received notifications, and based on the type and scope of the event, the PU locator manager finds the PU to perform the processing required by the event. The PUs locator manager 111 may be configured to communicate with the Graph Manager 123 to read the connections of the graph entities that it needs. In addition, the PU locator manager 111 may be configured to update affinity values and decide when a PU should be relocated. This functionality is discussed in more detail below with reference to a dynamic locator, which is a function which may be provided by the PUs locator manager 111.
- Event Manager 112 - This component is responsible for the coordination of the Events that trigger the PUs, in the PUs Execution Manager 124 (on the Storage Servers 120), and may include a queue of stored events that are processed in a specified order, such as FIFO.

In invention embodiments, processing operations may be executable in response to events (which may be referred to or consider to be "trigger events"). Events may include system events, data events, or domain events. System events correspond to system level operations and may be used to trigger processing operations that are applicable to a large number of graph entities i.e. processing operations that are linked (e.g by "has_behaviour" links) to a large number of graph entities. Data events are caused by data operations, e.g. data insertion, data visits, data update and removal, etc. Domain events accommodate requirements of a particular application domain and are generated when domain-specific actions are to be performed. In any case, an action is notified to the database controller, which generates an event for use in triggering certain processing operations represented in the data graph.

An exemplary process for managing events is set out below. The managing of events may be performed by a component of the database controller, such as an event controller or event manager, which may be realised as an event broker 110 including a PUs locator manager 111 and an event manager 112, such as discussed above with reference to Figure 3.

1. PUs exist within the database system and are associated to specific data, as denoted by directed labelled links between a functional entity representing the PU in the graph data representation and the specific data, either to instance level or concept level. A PU can be considered to be subscribed to certain event types, in response to which the PU is triggered (depending on the scope of the event), and are also associated to the data.

2. When an application issues an operation on the database system (by using the Server API 121), an event is generated in the server where the operation was issued.

3. The generated events are sent to the Event Broker and handled by the Event Manager (alternatively, the server API may simply notify the Event Broker 110 of the operation issued by the application and the Event Broker 110 responds by generating events on the basis of the received notification). The Event Manager 112 stores a queue of events to be processed. This queue follows a specific ordering policy, such as First In First Out (FIFO). The queue can be configured with different ordering policies.

4. Each event in the queue to be processed contains a scope, composed by an event type and the graph entity or range of graph entities to which the operation issued by the application relates (that is to say, the operation issued by the application may specify that processing is required on certain of the graph entities, or the fact that processing is required by certain of the graph entities may be derivable from the operation). Thus, in that sense certain of the semantic data can be considered to have "triggered" a processing unit, and hence a labelled semantic link between those graph entities and the functional entity representing the processing operation can be considered to have been triggered. Of course, those graph entities will also be accessed in the execution of the processing operation. For instance, if an application reads a data resource that describes the "Bird" concept and there is a PU that is waiting for read events and is linked to the "Bird" resource, the scope of this event is <type="read event", resource="Bird">, and the link is said to have been "triggered", or "fired".

5. The Event Manager 112 is configured to process each event by:

> a. using the scope information of the event sending a message to the PUs Locator Manager 111 requesting the address or ID of the server responsible for handling the event (i.e. the location of the functional entity corresponding to the event type of the event and linked to the graph entities specified in the event scope);
> b. sending the event to the previously calculated Storage Server, in particular to the PUs Execution Manager 124 component;
> c. The PUs Execution Manager 124 then invokes the handler of the PU that is subscribed on that scope, that is to say, executes the processing operation;
> d. If new events are generated by executing the PU, they are sent to the Event Broker. Executing a PU may give rise to more events, which hence cause the execution of other PUs. A single event can cause a cascade or chain of other events, for example, by the processing logic of a PU specifying that an event is issued in the system.

The calculation of affinity values will now be discussed in more detail. Affinity values may be calculated by a partitioning unit, which may be implemented by, for example, a data locator manager 125. Furthermore, affinity values may be calculated or modified by an event controller, which may be implemented by, for example, an event broker 110 having a PUs locator manager 111 configured to update data affinity values.

In a simple example, all directed labelled links (referred to as "links" elsewhere for convenience) may be considered equal. It is noted that links may be limited to connecting a pair of graph entities, so that three- or more graph entities cannot be related by a single link. Therefore, each link may be attributed the same data affinity value. That value may be fixed for the duration of its existence in the database system, or it may be updated in response to events and processing operations.

As a further, slightly more complicated, example, the affinity value attributed to a link may be dependent upon the type of link. For example, subsumption links, where two graph entities are connected by a link indicating that one should inherit all the properties of the other (for example, "instance", "sub-concept", "sub-class" links), also referred to as "is-a" links, may be attributed a higher affinity value than other links. Subsumption links denote than one linked entity is a parent of another.

In any of the examples for calculating affinity examples discussed herein, links indicating that one graph entity is a property of another are treated in the same way as links indicating that a functional entity, or the processing operation it represents, may access a semantic entity. Hence, a link to a PU is considered a restriction on the definition of a semantic entity in the same way as a semantic property restriction. However, in some of the more complex examples set out below, even though the two types of links are treated in the same way, it is not necessarily true that they will be given the same affinity value, since other factors are used in calculating affinity values.

The affinity value attributed to a link from a first graph entity to a second graph entity may be inversely proportional to the total number of links to semantic property restrictions and links to PUs connecting to the first graph entity. It can be appreciated intuitively that the affinity between two graph entities may be considered greater if the link between them is one of few restrictions placed on one of the entities rather than one of many.

The direction of labelled links is arbitrary as long as it is consistent throughout the data graph. A convention is required which is conformed to, for example, it may be that a directed labelled link (connection) starts from the subject entity and goes to the object entity. That is to say, the graph entity whose definition is restricted by the link is the source of the connection, and the graph entity which defines the range of the restriction is the destination of the connection.

An exemplary set of equations for calculating initial affinity values, and for updating them based on events, is set out below:

> Let $a$, $b$ be two resources, where $H$ and $P$ are sets of properties of an ontology (data graph), $B$ the set of behaviour references (connections between semantic entities and functional entities), P the set of property references (connections between pairs of semantic entities), and $P_a$ and $B_a$ the set of properties and behaviour connecting to resource $a$, the initial affinity value is calculated as:

$$\text{affinity}^1(a, b) = \begin{cases} \alpha, & (a, b) \in H \\ \dfrac{\beta}{|P_a \cup B_a|}, & (a, b) \in P \cup B, \end{cases}$$

The differentiation between two sets of ontological properties, *H* and *P*, is to facilitate configurable affinity computation, where different types of properties can be assigned with different affinity values. In the present example, an exemplar grouping of properties can be: *H* = {sub-concept. instance} and *P* for all non-subsumption/instantiation relationships. The set of properties H are exemplary of the hierarchy links mentioned elsewhere in this document, whereas B are exemplary of access links, and P exemplary of property links. Both B and P represent semantic restrictions on the source graph entity, and are treated the same in the above equation. H are treated as more important, but of course that is dependent upon the values given to coefficients $\alpha$ and $\beta$. Effectively, by setting $\alpha$ higher than $\beta$, graph nodes connected with "sub-concept" and "instance" relationships are considered to have higher initial affinity as indicate in the previous equation. Of course, it would not be necessary to set $\alpha$ higher than $\beta$, since $\alpha$ is not moderated by a number of links factor, and the actual values attributed to $\alpha$ and $\beta$ may be set and adjusted by a user or database administrator.

At the K iteration of event handling, the affinity values are updated as:

$$\text{affinity}^k(a, b) = \begin{cases} \text{affinity}^{k-1}(a, b), & \langle a, b \rangle \in H \ \lor \ \langle a, b \rangle \in P \\ 1 - f^k(a, b), & \langle a, b \rangle = \rho \in B, \text{and } \rho \text{ fired} \end{cases}$$

where

$$f^k(a, b) = f^{k-1}(a, b) \times \frac{1}{k}$$

The affinity value between *a* and *b* is adjusted only if an event is triggered (where *a* is the data and *b* is the functional entity representing a PU associated with *a*). The event handling causes the affinity to increase, infinitely approaching 1. In the above equation, $\alpha$ and $\beta$ are coefficients between 0 and 1. A link between a functional entity and a semantic entity may be considered to have "fired" in the equation above if the processing operation represented by the functional entity is executed and accesses the semantic entity during execution. Alternatively or additionally, it may be considered to have fired if the event which led to the execution of the processing operation represented by the functional entity included the semantic entity in its scope.

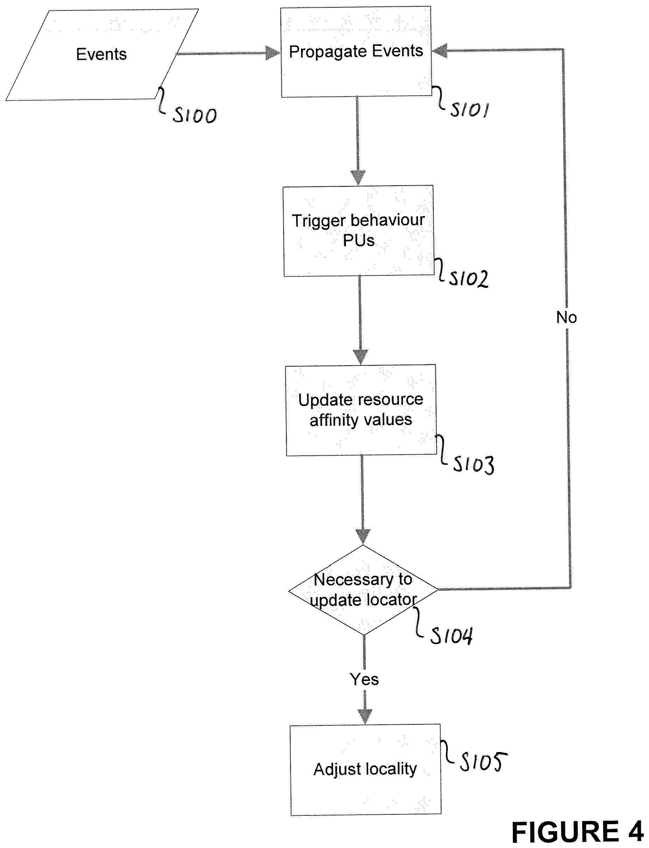

Figure 4 illustrates a flow of control for dynamically updating the location of processing logic in response to events being handled by the database system.

At S100 events are issued or generated. The events each require the execution of a processing unit by a server, and specify an event type which is domain-specific but corresponds to a processing unit or group of processing units, and scope which indicates the semantic data that the processing unit is required to access during execution, and hence limits the event to a particular processing unit (i.e. where there are more than one processing units for a particular type of event).

At S101 events are propagated to servers. Based on the combination of event type and event scope, and by referencing the data graph, an event manager or associated component (eg PUs locator manager 111) is operable to locate the functional entity representing the PU that is to be executed in response to the event. The location of the PU identifies the functional entity representing the PU, and hence the processing logic stored in association with the functional entity is identifiable, and also identifies the server on which the functional entity (and hence the associated processing logic) is stored.

At S102 the PU or PUs to be executed are triggered, which may include sending the event, or a modified form of the event, to the identified server (for example, it may be that a notification of the identified functional entity/processing logic and indication of event scope is sufficient, or there may be additional parameters/arguments that are included) which is configured to execute the identified processing logic/processing unit taking the event scope as an execution parameter.

Following execution of the processing unit, the flow proceeds to S103 at which resource (graph entity) affinity values are updated. This may be performed by a component such as the PUs locator manager 111 described above, possibly using the equation above, and including increasing the affinity value of the links between the functional entity representing the executed processing logic/unit, and the semantic entities identified in the event scope triggering the execution. Affinity values may be set to be between 0 and a nominal maximum (eg, 1), and the process of increasing the values may be to reduce the difference between the affinity value and the nominal maximum by a value dependent upon the number of events that have been handled by the system.

At S104 it is considered whether or not the update of the affinity values have satisfied a criterion used to decide when to move processing units between servers and when to maintain the current distribution. The criterion is based on the affinity values of links connecting the functional entity representing a processing unit to semantic entities. For example, S104 may involve summing the affinity values of links connecting the functional entity representing a processing unit to semantic entities on a particular server, for each server, to identify a server storing data to which the functional entity has the greatest total affinity, and if the identified server is not the server on which the functional entity is presently stored, or was most recently executed, then the criterion is satisfied. If the criterion is not satisfied ("no" at S104), the flow returns to S101. If the criterion is satisfied ("yes" at S104), then the flow proceeds to S105, and both the functional entity and the processing unit (logic required to execute the processing operation represented by the functional entity) are transferred to the identified server.

**Claims**

1. A database system comprising:

a distributed network of servers (30) configured to store a data graph (10) comprising linked graph entities including semantic entities linked by directed labelled links denoting semantic relationships between pairs of linked semantic entities, and also including functional entities each representing a processing operation and being linked by directed labelled links to one or more semantic entities denoting that the processing operation is configured to access the linked semantic entities during execution of the processing operation; and
a database controller (20) comprising:

a partitioning unit configured to partition the data graph (10) into sub graphs; and
a distributing unit configured to allocate each sub graph to a different server from among the distributed network of servers (30) ; wherein
the partitioning unit is configured to partition the data graph (10) in dependence upon the directed labelled links to preferentially partition linked entities into the same sub graph;

wherein the distributed network of servers (30) are configured to store the logic required to realise each processing operation on the same server as the functional entity representing the processing operation.

2. A database system according to claim 1, wherein each processing operation is associated with a type of event, and when the server storing the functional entity representing the processing operation receives a notification of an event of the associated type with a scope which includes a semantic entity linked to said functional entity via a directed labelled link, said server is configured to execute the processing operation.

3. A database system according to claim 2, wherein
the database controller (20) further comprises an event controller (110);
wherein an event is generated by an application accessing the database system or by a processing operation being executed within the database system, and the database controller (20) is configured to receive a generated event specifying an event type and a target semantic entity, to obtain an indication of the server or servers storing the functional entity representing the processing operation associated with the specified event type and having a directed labelled link to the target semantic entity, and to notify the indicated server of the specified type and target semantic entity of the event.

4. A database system according to any of the preceding claims, wherein
the partitioning unit is configured to attribute an affinity value to each directed labelled link between entities, and to use the affinity values to partition the data graph (10).

5. A database system according to claim 4, wherein the partitioning unit is configured to partition the data graph (10) such that the total of the affinity values of directed labelled links between graph entities in different sub graphs is minimised.

6. A database system according to claim 4, wherein
the partitioning unit is configured to set a threshold value and to ensure that any graph entities linked by a directed labelled link having an affinity value above the threshold value are partitioned into the same sub graph.

7. A database system according to claim 4, wherein
the directed labelled links are stored in association with their respective affinity values.

8. A database system according to claim 4, wherein
after a processing operation is executed, the partitioning unit is configured to increase the affinity values of directed labelled links between the functional entity representing the executed processing operation and the one or more semantic entities accessed during the execution.

9. A database system according to claim 8, wherein
if, after increasing the affinity values, a relocation criterion is satisfied, the partitioning unit is configured to relocate the functional entity to another server from among the distributed network of servers (30), and to move the logic required to realise the processing operation represented by the relocated functional entity to the another server.

10. A database system according to claim 9, wherein the relocation criterion is satisfied if:

there is another server on which graph entities linked to the functional entity are stored; and
the sum of the affinity values of the links between the functional entity and the graph entities stored on the another server exceeds the sum of the affinity values of the links between the functional entity and the graph entities currently stored on the same server as the functional entity;
and if the relocation criterion is satisfied then the functional entity is moved to the another server.

11. A database system according to claim 4, wherein
hierarchy links, that is directed labelled links denoting that the semantic relationship between a pair of entities is that one of the pair is a subset of the other, are given a higher data affinity value than:

property links, that is directed labelled links denoting that the semantic relationship between a pair of entities is that one of the pair is a property of the other; and
access links, that is directed labelled links between a functional entity and a semantic entity which the processing operation represented by the functional entity is configured to access during execution.

12. A database system according to any of the preceding claims, wherein
the data graph (10) is stored in an encoded form.

13. A database system according to claim 12, wherein
the encoded form is triples, each triple comprising a label of a subject entity, a label of an object entity, and a predicate indicating a type of relationship between the subject entity and the object entity, wherein the subject entity and the object entity are each either semantic entities or functional entities.

14. A method of storing a data graph (10), the method comprising:

storing the data graph across a distributed network of servers (30), the data graph comprising linked graph entities including semantic entities linked by directed labelled links denoting semantic relationships between pairs of linked semantic entities, and also including functional entities each representing a processing operation and being linked by directed labelled links to one or more semantic entities denoting that the processing operation is configured to access the linked semantic entities during execution of the processing operation; and
at a database controller (20):

partitioning the data graph (10) into sub graphs; and
allocating each sub graph to a different server from among the distributed network of servers (30); wherein the partitioning includes partitioning the data graph (10) in dependence upon the directed labelled links to preferentially partition linked entities into the same sub graph;

and the method further comprises:

storing the logic required to realise each processing operation on the same server as the functional entity representing the processing operation.

15. A suite of computer programs which, when executed by a distributed network of servers, cause the distributed network of servers to become the database system according to any of claims 1 to 13.

**Patentansprüche**

1. Datenbanksystem, das Folgendes umfasst:

ein verteiltes Netzwerk von Servern (30), die ausgestaltet sind, um einen Datengraph (10) zu speichern, der verknüpfte Graphentitäten umfasst, die semantische Entitäten umfassen, die durch gerichtete benannte Verknüpfungen verknüpft sind, die semantische Beziehungen zwischen Paaren von verknüpften semantischen Entitäten bezeichnen, und auch funktionelle Entitäten umfassen, die jeweils eine Verarbeitungsoperation darstellen und durch gerichtete benannte Verknüpfungen mit einer oder mehreren semantischen Entitäten verknüpft sind, die bezeichnen, dass die Verarbeitungsoperation ausgestaltet ist, um auf die verknüpften semantischen Entitäten während der Ausführung der Verarbeitungsoperation zuzugreifen; und
eine Datenbank-Steuereinrichtung (20), die Folgendes umfasst:

eine Partitionierungseinheit, die ausgestaltet ist, um den Datengraph (10) in Untergraphen zu partitionieren; und
eine Verteilungseinheit, die ausgestaltet ist, um jeden Untergraph einem unterschiedlichen Server unter dem verteilten Netzwerk von Servern (30) zuzuteilen; wobei die Partitionierungseinheit ausgestaltet ist, um den Datengraph (10) in Abhängigkeit von den gerichteten benannten Verknüpfungen zu partitionieren, um vorzugsweise verknüpfte Entitäten in denselben Untergraph zu partitionieren;
wobei das verteilte Netzwerk von Servern (30) ausgestaltet ist, um die Logik, die zum Ausführen jeder Verarbeitungsoperation erforderlich ist, auf demselben Server zu speichern wie die funktionelle Entität, die die Verarbeitungsoperation darstellt.

2. Datenbanksystem nach Anspruch 1, wobei jede Verarbeitungsoperation einem Typ von Ereignis zugehörig ist und wenn der Server, der die funktionelle Entität speichert, die die Verarbeitungsoperation speichert, eine Meldung von einem Ereignis des verknüpften Typs mit einem Anwendungsbereich empfängt, das eine semantische Entität umfasst, die mit der funktionellen Entität über eine gerichtete benannte Verknüpfung verknüpft ist, der Server ausgestaltet ist, um die Verarbeitungsoperation auszuführen.

3. Datenbanksystem nach Anspruch 2, wobei:

die Datenbank-Steuereinrichtung (20) ferner eine Ereignissteuereinrichtung (110) umfasst wobei ein Ereignis durch eine Anwendung, die auf das Datenbanksystem zugreift, oder durch eine Verarbeitungsoperation erzeugt wird, die innerhalb des Datenbanksystems ausgeführt wird, und die Datenbank-Steuereinrichtung (20) ausgestaltet ist, um ein erzeugtes Ereignis zu empfangen, das einen Ereignistyp und eine semantische Zielentität angibt, um eine Angabe des Servers oder der Server zu erhalten, der oder die die funktionelle Entität speichern, die die Verarbeitungsoperation darstellt, die dem angegebenen Ereignistyp zugehörig ist, und eine gerichtete benannte Verknüpfung mit der semantischen Zielentität aufweist, und um den angegebenen Server über den angegebenen Typ und die semantische Zielentität des Ereignisses zu benachrichtigen.

4. Datenbanksystem nach einem der vorhergehenden Ansprüche, wobei die Partitionierungseinheit ausgestaltet ist, um jeder gerichteten benannten Verknüpfung zwischen Entitäten einen Affinitätswert zuzuordnen und um die Affinitätswerte zum Partitionieren der Graphdaten (10) zu verwenden.

5. Datenbanksystem nach Anspruch 4, wobei die Partitionierungseinheit ausgestaltet ist, um den Datengraph (10) derart zu partitionieren, dass die Summe der Affinitätswerte der gerichteten benannten Verknüpfungen zwischen Graphentitäten in unterschiedlichen Untergraphen minimiert wird.

6. Datenbanksystem nach Anspruch 4, wobei:

die Partitionierungseinheit ausgestaltet ist, um einen Schwellenwert einzustellen und um sicherzustellen, dass irgendwelche Graphentitäten, die durch eine gerichtete benannte Verknüpfung verknüpft sind, die einen Affinitätswert über dem Schwellenwert aufweist, in denselben Untergraphen partitioniert werden.

**7.** Datenbanksystem nach Anspruch 4, wobei
die gerichteten benannten Verknüpfungen in Verbindung mit ihren entsprechenden Affinitätswerten gespeichert werden.

**8.** Datenbanksystem nach Anspruch 4, wobei
die Partitionierungseinheit ausgestaltet ist, um, nachdem die Verarbeitungsoperation ausgeführt wurde, die Affinitätswerte der gerichteten benannten Verknüpfungen zwischen der funktionellen Entität, die die ausgeführte Verarbeitungsoperation darstellt, und der einen oder den mehreren semantischen Entitäten, auf die während der Ausführung zugegriffen wurde, zu erhöhen.

**9.** Datenbanksystem nach Anspruch 8, wobei:

die Partitionierungseinheit ausgestaltet ist, um, wenn nach dem Erhöhen der Affinitätswerte ein Verschiebungskriterium erfüllt ist, die funktionelle Entität auf einen anderen Server unter dem verteilten Netzwerk von Servern (30) zu verschieben und um die Logik, die zum Ausführen der Verarbeitungsoperation, die durch die verschobene funktionelle Entität dargestellt wird,
erforderlich ist, auf den anderen Server zu bewegen.

**10.** Datenbanksystem nach Anspruch 9, wobei das Verschiebungskriterium erfüllt ist, wenn:

ein anderer Server vorhanden ist, auf dem Graphentitäten, die mit der funktionellen Entität verknüpft sind, gespeichert sind; und
die Summe der Affinitätswerte der Verknüpfungen zwischen der funktionellen Entität und den Graphentitäten, die auf dem anderen Server gespeichert sind, die Summe der Affinitätswerte der Verknüpfungen zwischen der funktionellen Entität und den Graphentitäten überschreitet,
die gegenwärtig auf demselben Server gespeichert sind wie die funktionelle Entität;
und wenn das Verschiebungskriterium erfüllt ist, die funktionelle Entität auf den anderen Server verschoben wird.

**11.** Datenbanksystem nach Anspruch 4, wobei:

Hierarchieverknüpfungen, das heißt gerichteten benannten Verknüpfungen, die bezeichnen, dass die semantische Beziehung zwischen einem Paar von Entitäten darin besteht, dass eines von dem Paar eine Untermenge des anderen ist, ein höherer Datenaffinitätswert gegeben wird als:

Eigenschaftsverknüpfungen, das heißt gerichteten benannten Verknüpfungen, die bezeichnen, dass die semantische Beziehung zwischen einem Paar von Entitäten darin besteht, dass eines von dem Paar eine Eigenschaft des anderen ist; und
Zugriffsverknüpfungen, das heißt gerichteten benannten Verknüpfungen zwischen einer funktionellen Entität und einer semantischen Entität, auf die die Verarbeitungsoperation, die durch die funktionelle Entität dargestellt wird, ausgestaltet ist, während der Ausführung zuzugreifen.

**12.** Datenbanksystem nach einem der vorhergehenden Ansprüche, wobei:

der Datengraph (10) in einer codierten Form gespeichert ist.

**13.** Datenbanksystem nach Anspruch 12, wobei:

die codierte Form aus Tripeln besteht, wobei jedes Tripel eine Benennung einer Subjektentität, eine Benennung einer Objektentität und ein Prädikat umfasst, das einen Typ von Beziehung zwischen der Subjektentität und der Objektentität angibt, wobei die Subjektentität und die Objektentität jeweils entweder semantische Entitäten oder funktionelle Entitäten sind.

**14.** Verfahren zum Speichern eines Datengraphen (10), wobei das Verfahren Folgendes umfasst:

Speichern des Datengraphen durch ein verteiltes Netzwerk von Servern (30), wobei der Datengraph verknüpfte Graphentitäten umfasst, die semantische Entitäten umfassen, die durch gerichtete benannte Verknüpfungen verknüpft sind, die semantische Beziehungen zwischen Paaren von verknüpften semantischen Entitäten bezeichnen, und auch funktionelle Entitäten umfassen, die jeweils eine Verarbeitungsoperation darstellen und durch gerichtete benannte Verknüpfungen mit einer oder mehreren semantischen Entitäten verknüpft sind, die bezeichnen, dass die Verarbeitungsoperation ausgestaltet ist, um auf die verknüpften semantischen Entitäten während der Ausführung der Verarbeitungsoperation zuzugreifen; und
an einer Datenbank-Steuereinrichtung (20):

Partitionieren des Datengraphen (10) in Untergraphen; und
Zuteilen jedes Untergraphen zu einem unterschiedlichen Server unter dem verteilten Netzwerk von Servern (30); wobei
das Partitionieren das Partitionieren des Datengraphen (10) in Abhängigkeit von den gerichteten bezeichneten Verknüpfungen umfasst, um vorzugsweise verknüpfte Entitäten in denselben Untergraph zu partitionieren;
und das Verfahren ferner Folgendes umfasst:

Speichern der Logik, die zum Ausführen jeder Verarbeitungsoperation erforderlich ist, auf demselben Server wie die funktionelle Entität, die die Verarbeitungsoperation darstellt.

15. Suite von Computerprogrammen, die, wenn sie durch ein verteiltes Netzwerk von Servern ausgeführt werden, bewirken, dass das verteilte Netzwerk von Servern das Datenbanksystem nach einem der Ansprüche 1 bis 13 wird.

## Revendications

1. Système de base de données comprenant :

un réseau distribué de serveurs (30) configurés pour stocker un graphique de données (10) comprenant des entités de graphique liées, y compris des entités sémantiques liées par des liens étiquetés dirigés indiquant des relations sémantiques entre des paires d'entités sémantiques liées, et comprenant également des entités fonctionnelles représentant chacune une opération de traitement et étant liées par des liens étiquetés dirigés à une ou plusieurs entités sémantiques indiquant que l'opération de traitement est configurée pour accéder aux entités sémantiques liées lors de l'exécution de l'opération de traitement ; et
une commande de base de données (20) comprenant :

une unité de partitionnement configurée pour partitionner le graphique de données en sous-graphiques (10); et
une unité de distribution configurée pour allouer chaque sous-graphique à un serveur différent parmi le réseau distribué de serveurs (30) ; dans lequel
l'unité de partitionnement est configurée de manière à partitionner le graphique de données (10) en fonction des liens étiquetés dirigés pour partitionner de préférence des entités reliées dans le même sous-graphique ; dans lequel le réseau distribué de serveurs (30) est configuré pour stocker la logique nécessaire pour réaliser chaque opération de traitement sur le même serveur que l'entité fonctionnelle qui représente l'opération de traitement.

2. Système de base de données selon la revendication 1, dans lequel chaque opération de traitement est associée à un type d'événement, et lorsque le serveur stockant l'entité fonctionnelle qui représente l'opération de traitement reçoit une notification d'un événement du type associé à un champ qui comprend une entité sémantique liée à ladite entité fonctionnelle via un lien étiqueté dirigé, ledit serveur est configuré pour exécuter l'opération de traitement.

3. Système de base de données selon la revendication 2, dans lequel
la commande base de données (20) comprend en outre une commande d'événement (110) ;
dans lequel un événement est généré par une application accédant au système de base de données ou par une opération de traitement en cours d'exécution dans le système de base de données, et la commande de base de données (20) est configurée pour recevoir un événement généré spécifiant un type d'événement et une entité sémantique cible, pour obtenir une indication du serveur ou des serveurs stockant l'entité fonctionnelle représentant l'opération de traitement associée au type d'événement spécifié et ayant un lien étiqueté dirigé vers l'entité sémantique cible, et pour notifier le serveur indiqué du type spécifié et l'entité sémantique cible de l'événement.

4. Système de base de données selon l'une quelconque des revendications précédentes, dans lequel
l'unité de partitionnement est configurée pour attribuer une valeur d'affinité pour chaque lien étiqueté dirigé entre des entités, et utiliser les valeurs d'affinité pour partitionner le graphique de données (10).

5. Système de base de données selon la revendication 4, dans lequel l'unité de séparation est configurée de manière à partitionner le graphique de données (10) de telle sorte que le total des valeurs d'affinité de liens étiquetés dirigés entre des entités de graphiques dans différents sous-graphiques est minimisé.

6. Système de base de données selon la revendication 4, dans lequel
l'unité de partitionnement est configurée pour définir une valeur de seuil et pour garantir que toutes les entités de graphique reliées entre elles par un lien étiqueté dirigé ayant une valeur d'affinité supérieure à la valeur de seuil sont partitionnées dans le même sous-graphique.

7. Système de base de données selon la revendication 4, dans lequel
les liens étiquetés dirigés sont stockés en association avec leurs valeurs d'affinité respectives.

8. Système de base de données selon la revendication 4, dans lequel,
après qu'une opération de traitement ait été exécutée, l'unité de partitionnement est configurée pour augmenter les valeurs d'affinité de liens étiquetés dirigés entre l'entité fonctionnelle qui représente l'opération de traitement exécutée et les unes ou plusieurs entités sémantiques consultées au cours de l'exécution.

9. Système de base de données selon la revendication 8, dans lequel
si, après l'augmentation des valeurs d'affinité, un critère de relocalisation est satisfait, l'unité de partitionnement est configurée pour relocaliser l'entité fonctionnelle vers un autre serveur parmi le réseau distribué de serveurs (30), et pour déplacer la logique nécessaire pour réaliser l'opération de traitement représentée par l'entité fonctionnelle relocalisée à l'autre serveur.

10. Système de base de données selon la revendication 9, dans lequel le critère de relocalisation est satisfait si :

il y a un autre serveur sur lequel des entités de graphique liées à l'entité fonctionnelle sont stockées ; et
la somme des valeurs d'affinité des liens entre l'entité fonctionnelle et les entités de graphique stockées sur l'autre serveur est supérieure à la somme des valeurs d'affinité des liens entre l'entité fonctionnelle et les entités de graphique actuellement stockées sur le même serveur que l'entité fonctionnelle ;
et si le critère de relocalisation est satisfait, alors l'entité fonctionnelle est déplacée vers l'autre serveur.

11. Système de base de données selon la revendication 4, dans lequel
des liens hiérarchiques, à savoir des liens étiquetés dirigés indiquant que la relation sémantique entre une paire d'entités est qu'une de la paire est un sous-ensemble de l'autre, reçoivent une valeur d'affinité de données plus élevé que :

des liens de propriété, à savoir des liens étiquetés dirigés indiquant que la relation sémantique entre une paire d'entités est qu'une de la paire est une propriété de l'autre ; et
des liens d'accès, à savoir des liens étiquetés dirigés entre une entité fonctionnelle et une entité sémantique, auxquels l'opération de traitement représentée par l'entité fonctionnelle est configurée pour accéder pendant une exécution.

12. Système de base de données selon l'une quelconque des revendications précédentes, dans lequel
le graphique de données (10) est stocké sous une forme codée.

13. Système de base de données selon la revendication 12, dans lequel
la forme codée est des triples, chaque triple comprenant une étiquette d'une entité visée, une étiquette d'une entité objet, et un prédicat indiquant un type de relation entre l'entité visée et l'entité d'objet, dans laquelle l'entité visée et l'entité d'objet sont chacune des entités sémantiques ou des entités fonctionnelles.

14. Procédé de stockage d'un graphique de données (10), le procédé comprenant les étapes consistant à :

stocker le graphique de données sur un réseau distribué de serveurs (30), le graphique de données comprenant des entités graphiques liées, y compris des entités sémantiques liées par des liens étiquetés dirigés indiquant des relations sémantiques entre des paires d'entités sémantiques liées, et comprenant également des entités fonctionnelles représentant chacune une opération de traitement et étant liées par des liens étiquetés dirigés vers une ou plusieurs entités sémantiques indiquant que l'opération de traitement est configurée pour accéder aux entités sémantiques liées lors de l'exécution de l'opération de traitement ; et

au niveau d'une commande de base de données (20) :

partitionner le graphique de données (10) en sous-graphiques ; et

attribuer chaque sous-graphique à un serveur différent parmi le réseau distribué de serveurs (30) ; dans lequel

le partitionnement inclut le partitionnement du graphique de données (10) en fonction des liens étiquetés dirigés pour partitionner de préférence des entités liées dans le même sous-graphique ;

et le procédé comprend en outre l'étape consistant à :

stocker la logique nécessaire pour réaliser chaque opération de traitement sur le même serveur que l'entité fonctionnelle qui représente l'opération de traitement.

**15.** Suite de programmes informatiques qui, lorsqu'exécutées par un réseau de serveurs distribués, amènent le réseau distribué de serveurs à devenir le système de base de données selon l'une quelconque des revendications 1 à 13.

Graph data representation

10

Database controller

20

30

Distributed network of servers

**FIGURE 1**

**FIGURE 2**

Communication between the Event Manager
and the PUs Execution Manager

Communication between the PUs Locator Manager
and the Graph Manager

Communication between different instances of Data Locator Manager

Communication between the server and the Local Storage

# FIGURE 3

Events — S100

Propagate Events — S101

Trigger behaviour PUs — S102

Update resource affinity values — S103

Necessary to update locator — S104

No

Yes

Adjust locality — S105

**FIGURE 4**

**REFERENCES CITED IN THE DESCRIPTION**

**Non-patent literature cited in the description**

- **PRIMA CHAIRUNNANDA et al.** Graph Data Partition Models for online Social Networks. *HT '12 Proceedings of the 23rd ACM conference on Hypertext and social media,* 25 June 2012, 175-179